# EUROPEAN PATENT APPLICATION

(11) **EP 4 062 999 A1**
(43) Date of publication of application: **28.09.2022**
(21) Application number: 22158852.8
(22) Date of filing: 25.02.2022
(51) Int. Cl.: B01D 53/18, B01D 53/62, B01D 53/75, B01D 53/78

(54) **AN AIR PURIFIER WITH INCREASED OPERATIONAL SPEED**

(30) Priority: 10.03.2021 TR 202104528
(71) Applicant: Arçelik Anonim Sirketi, 34445 Istanbul (TR)
(72) Inventor: SARICIFTCI, Niyazi Serdar, 34445 ISTANBUL (TR); YAVUZ, Pinar, 34445 ISTANBUL (TR); YESILCUBUK, Alper, 34445 ISTANBUL (TR); TARKUC, Simge, 34445 ISTANBUL (TR); ER, Dilan, 34445 ISTANBUL (TR)

(57) **Abstract**

The present invention relates to an air purifier (1) comprising a body (2) having an air inlet (I) through which the ambient air is sucked, a clean air outlet (O) through which the cleaned air is released to the environment and a CO₂ outlet (2) through which the carbon dioxide separated from the air is discharged to the outside; a CO ₂ adsorption unit (3) which enables the carbon dioxide in the air to be processed with a basic solution so as to be converted to carbonate solution and chemically adsorbed; and a base tank (5) which supplies the basic solution to the CO₂ adsorption unit (3).

## Description

The present invention relates to an air purifier wherein the ambient air is purified by processing the carbon dioxide in the air with acidic and basic solutions and adsorbing the carbon dioxide and wherein the operational speed and the carbon dioxide adsorption rate thereof are increased.

The need for purifying the air inside indoor environments such as buildings, homes and offices is gaining importance for human health day by day. In particular, in devices that purify the air by filtering, the carbon dioxide ratio in the air remains constant and only matters such as dust, etc. are filtered and the inhaled air is purified from contents such as bacteria, dust, fungi, and viruses. In the air purifiers wherein the air is completely purified by adsorbing the carbon dioxide in the air, it is critical for the efficient operation of the purifier to manage the carbon dioxide adsorption rate and duration.

The aim of the present invention is the realization of an air purifier which adsorbs the carbon dioxide in the sucked ambient air so as to cleanse the air of the carbon dioxide and continuously purifiers the ambient air.

Another aim of the present invention is the realization of an air purifier wherein the carbon dioxide is quickly and efficiently separated from the ambient air so as to purify the air.

The air purifier of the present invention comprises a body having an air inlet through which the ambient air in an environment such as closed building, room, office, etc. is sucked by means of a fan and a pump, and a clean air outlet through which the cleaned air is released back into the environment. The air is sucked into a CO₂ adsorption unit in the body. The basic solution in a base tank disposed in the body is supplied to said CO₂ adsorption unit, and the carbon dioxide in the air is converted to carbonate solution as a result of the chemical reaction thereof with the basic solution, and then adsorbed by the CO₂ adsorption unit. The process wherein the carbon dioxide in the ambient air is adsorbed is realized in the CO₂ adsorption unit. The basic solution and the gases in the air such as carbon dioxide, etc. react, and the reaction results in the carbonate compound (in the form of liquid solution) and other by-products. Thus, the carbon dioxide is adsorbed in the CO₂ adsorption unit in the form of carbonate (bicarbonate, etc.). Other gases (oxygen and other gases found in the natural air) released as a result of the reaction are discharged back to the room through a clean air outlet.

The reaction realized in the CO₂ adsorption unit can be symbolized as in the following reaction:
MOH + CO₂ + other inert gases in the air → M(CO₃)/MH(CO₃) + clean air (carbon dioxide thereof adsorbed).

In an embodiment of the present invention, the basic solution used can be sodium hydroxide (NaOH) or potassium hydroxide (KOH). In order to realize the invention, basic solutions such as monoethanolamine, ammonia, alkaline solutions (KOH, NaOH) can be used in the base tank. These solutions react with the carbon dioxide and produce carbonate-based compounds. Therefore, these basic solutions can enable the adsorption of the carbon dioxide which is required for the operation of the air purifier of the present invention.

In the air purifier of the present invention, the carbonate solution generated as a result of the air and the basic solution are processed with an acidic solution, thus releasing carbon dioxide again, and a salt solution is generated during the producing of carbon dioxide. Thus, the carbon dioxide separated from the ambient air is discharged out of the environment (room, office, etc.) by means of a separate discharge channel. In an embodiment of the present invention, said discharge channel can be a pipe which opens to the outside by drilling a room wall and which is connected to the body at one end.

The carbonate solution which is produced in the CO₂ adsorption unit is then processed with an acidic solution. However, when the acidic solution present in the body of the purifier is desired to be directly sent to the CO₂ adsorption unit to free the carbon dioxide, the air purifier operates intermittently. It is not possible to supply air and a basic solution again to the CO₂ adsorption unit before completing the reaction between the acidic solution supplied to the CO₂ adsorption unit and the carbonate solution in the unit. This prevents new ambient air from being sucked into the body without completely purifying the sucked ambient air in the air purifier. Therefore, the air purifier operates slowly and cannot purify an efficient volume of ambient air in the environment wherein the air is desired to be purified.

In an embodiment of the present invention, the acidic solution can be a strong acid (H₂SO4, HCl), weak acid (K₃PO₄) or an organic acid. The air purifier of the present invention comprises an acid tank wherein the acidic solution is loaded.

In order to solve the above-mentioned problem, the air purifier of the present invention comprises a mixture tank wherein the carbon dioxide converted into carbonate solution in the CO₂ adsorption unit is processed with the acidic solution so as to be released again and discharged from the environment. In the air purifier of the present invention, the ambient air is first processed with the basic solution in the CO₂ adsorption unit, and then the resulting carbonate solution is sent to the mixture tank by means of a pump and delivery pipes. The acidic solutions is supplied from the acid tank to said mixture tank in an amount predetermined by the manufacturer, which corresponds to the amount of the carbonate solution. Thus, the entire carbonate solution reacts with the acid, which leads to the generation of only salt solution and carbon dioxide in the mixture tank. The carbon dioxide which is released again is discharged from the room through an exhaust (discharge) line.

In the air purifier of the present invention, the reaction realized in the acid tank is the reaction of the carbonate compound with the acidic solution, and the reaction results in the release of metal salts, carbon dioxide and water.

In an embodiment of the present invention, the base tank comprises a sodium hydroxide solution (NaOH) and the acid tank comprises a sulfuric acid (H₂SO₄) solution. In this embodiment, the reaction occurring in the CO₂ adsorption unit is as follows:

NaOH + CO₂→ Na₂CO₃/NaHCO₃+ H₂O

The reaction occurring in the mixture tank is as follows:

Na₂CO₃+H₂SO₄→ Na₂SO₄+CO₂+ H₂O

In order for the reactions occurring in the air purifier of the present invention to start and occur, the room temperature of 25°C is sufficient.

In the air purifier of the present invention, the salt solution produced as a result of processing the air with basic solution and acidic solution, respectively, is separated by means of at least one electrodialysis unit, and the acidic solution is fed back to the acid tank and the basic solution to the base tank. Thus, the need for continuously supplying fresh acidic and basic solutions to the air purifier is eliminated.

The acid tank and the base tank are manufactured from a material resistant to acid and base solutions, for example polypropylene.

In an embodiment of the present invention, the acidic, basic and salt solutions are put into receptacles which are positioned one below the other and/or side by side.

By means of the present invention, an air purifier is realized, wherein the ambient air is continuously cleansed of carbon dioxide.

The model embodiments that relate to the air purifier realized in order to attain the aim of the present invention are illustrated in the attached figures, where:

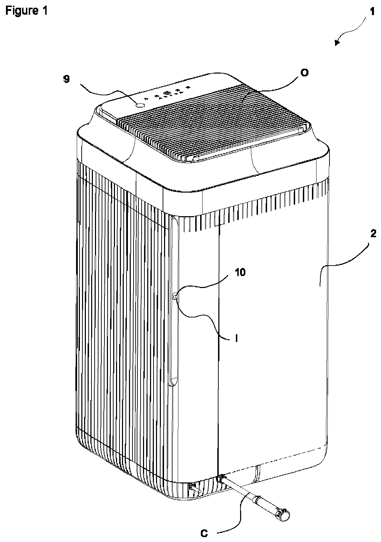

Figure 1 - is the perspective view of the air purifier in an embodiment of the present invention.

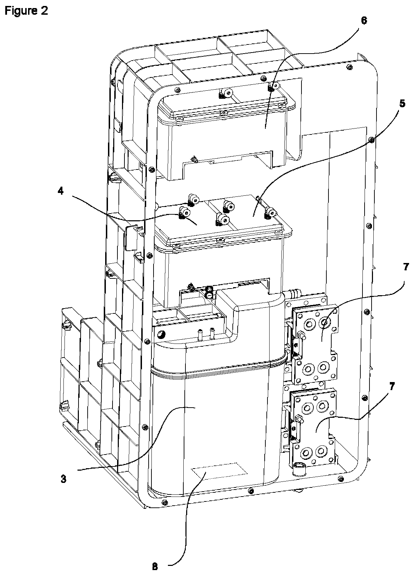

Figure 2 - is the view of the acid tank, the base tank, the CO₂ adsorption unit and the mixture tank in the air purifier of the present invention.

The elements illustrated in the figures are numbered as follows:
1. Air purifier
2. Body
3. CO₂ adsorption unit
4. Acid tank
5. Base tank
6. Mixture tank
7. Electrodialysis unit
8. Sensor
9. Control unit
10. CO₂ sensor
I: Air inlet
O: Clean air outlet
C: CO₂ outlet

The air purifier (1) comprises a body (2) having an air inlet (I) through which the ambient air is sucked, a clean air outlet (O) through which the cleaned air is released to the environment and a CO₂ outlet (2) through which the carbon dioxide separated from the air is discharged to the outside; a CO₂ adsorption unit (3) which enables the carbon dioxide in the air to be processed with a basic solution so as to be converted to carbonate solution and chemically adsorbed; and a base tank (5) which supplies the basic solution to the CO₂ adsorption unit (3).

The air purifier (1) of the present invention comprises a mixture tank (6) which receives the carbonate solution from the CO₂ adsorption unit (3) to be processed with an acidic solution, and an acid tank (4) which supplies the acidic solution to the mixture tank (6).

The air purifier (1) of the present invention comprises the air inlet (I) through which the ambient air is sucked into the body (2). The ambient air is sucked into the body (2) through the air inlet (I) by means of a fan and a pump. Some of the sucked air is directed to the CO₂ adsorption unit (3). The air is supplied to the CO₂ adsorption unit (3) which contains a basic solution. The basic solution and the air react in the CO₂ adsorption unit (3), thus producing a carbonate solution. When the resulting carbonate solution completes the carbonation reaction at a certain rate, some of the carbonate solution is sent to the mixture tank (6) by means of a delivery pipe, etc. When the carbonate solution is obtained in the CO₂ adsorption unit (3), the remaining clean air is sent back to the environment through the clean air outlet (O). Thus, the CO₂ adsorption unit (3) which receives the air continues to adsorb the CO₂ gas. An acidic solution kept in the acid tank (4) is supplied to the carbonate solution which is sent to the mixture tank (6), thus ensuring a reaction between the acidic solution and the carbonate solution. The reaction results in a salt solution, and the carbon dioxide adsorbed from the air in the CO₂ adsorption unit (3 is released again. The released carbon dioxide is discharged out of the closed boundaries of the environment through the CO₂ outlet (C) (for example by drilling the wall, etc.).

In an embodiment of the present invention, the air purifier (1) of the present invention comprises a sensor (8) which is disposed in the CO₂ adsorption unit (3), and a control unit (9) which, after the carbonate compound is generated as a result of the reaction of the basic solution and the carbon dioxide in CO₂ adsorption unit (3), enables the carbonate solution to be delivered to the mixture tank (6) according to the data received from the sensor (8). The sensor (8) is a sensor which can measure any one of the molarity, pH or molecular bonds of the solution in the CO₂ adsorption unit (3) so as to detect the presence of the carbonate solution.

In an embodiment of the present invention, the air purifier (1) comprises a CO₂ sensor (10) which is disposed at the air inlet (I), and a control unit (9) which calculates the aging of the basic solution in the CO₂ adsorption unit (3) according to the change in the carbon dioxide concentration in the air measured by the CO₂ sensor (10), and which detects the presence of the carbonate solution in the CO₂ adsorption unit (3) according to the aging of the basic solution so as to deliver the carbonate solution to the mixture tank (6). In this embodiment, by measuring the amount of CO₂ (ppm) in the sucked air, the aging period of the basic solution in the CO₂ adsorption unit (3), can be monitored. Thus, when the adsorption reaction is realized in the rate predetermined by the manufacturer in the CO₂ adsorption unit (3), the carbonate solution leaves the CO₂ adsorption unit (3).

In an embodiment of the present invention, the air purifier (1) comprises a control unit (9) which calculates the amount of carbonate solution produced in the CO₂ adsorption unit (3) according to the data received from the sensor (8) and/or the CO₂ sensor (10), and which doses the acidic solution to the mixture tank (6) in the amount predetermined by the manufacturer corresponding to the amount of the carbonate solution sent to the mixture tank (6). Thus, the entire carbon dioxide adsorbed previously in the CO₂ adsorption unit (3) is released in the mixture tank (6), and no carbonate solution remains in the mixture tank (6).

In an embodiment of the present invention, the air purifier (1) comprises a control unit (9) which enables the suction of new air into the CO₂ adsorption unit (3) after the carbonate solution in the CO₂ adsorption unit (3) is delivered to the mixture tank (6).

In an embodiment of the present invention, the air purifier (1) comprises at least one electrodialysis unit (7) which enables the salt solution generated after the carbonate solution and the acidic solution sent to the mixture tank (6) are processed to separate again into acid and base. Thus, the need for the user to continuously add acidic and basic solutions to the air purifier (1) is eliminated, and the air purifier (1) operates in a closed cycle except for the routine checks to be performed by the manufacturer or the authorized service.

By means of the present invention, an air purifier (1) is realized, which can continuously perform the air purification cycle.

## Claims

1. An air purifier (1) **comprising** a body (2) having an air inlet (I) through which the ambient air is sucked, a clean air outlet (O) through which the cleaned air is released to the environment and a CO₂ outlet (2) through which the carbon dioxide separated from the air is discharged to the outside; a CO₂ adsorption unit (3) which enables the carbon dioxide in the air to be processed with a basic solution so as to be converted to carbonate solution and chemically adsorbed; and a base tank (5) which supplies the basic solution to the CO₂ adsorption unit (3), **characterized by** a mixture tank (6) which receives the carbonate solution from the CO₂ adsorption unit (3) to be processed with an acidic solution, and an acid tank (4) which supplies the acidic solution to the mixture tank (6).

2. An air purifier (1) as in Claim 1, **characterized by** a sensor (8) which is disposed in the CO₂ adsorption unit (3), and a control unit (9) which, after the carbonate compound is generated as a result of the reaction of the basic solution and the carbon dioxide in the CO₂ adsorption unit (3), enables the carbonate solution to be delivered to the mixture tank (6) according to the data received from the sensor (8).

3. An air purifier (1) as in Claim 1 or 2, **characterized by** a CO₂ sensor (10) which is disposed at the air inlet (I), and a control unit (9) which calculates the aging of the basic solution in the CO₂ adsorption unit (3) according to the change in the carbon dioxide concentration in the air measured by the CO₂ sensor (10), and which detects the presence of the carbonate solution in the CO₂ adsorption unit (3) according to the aging of the basic solution so as to deliver the carbonate solution to the mixture tank (6).

4. An air purifier (1) as in any one of the Claims 1 to 3, **characterized by** a control unit (9) which calculates the amount of carbonate solution produced in the CO₂ adsorption unit (3) according to the data received from the sensor (8) and/or the CO₂ sensor (10), and which doses the acidic solution to the mixture tank (6) in the amount predetermined by the manufacturer corresponding to the amount of the carbonate solution sent to the mixture tank (6).

5. An air purifier (1) as in any one of the Claims 1 to 4, **characterized by** a control unit (9) which enables the suction of new air into the CO₂ adsorption unit (3) after the carbonate solution in the CO₂ adsorption unit (3) is delivered to the mixture tank (6).

6. An air purifier (1) as in any one of the Claims 1 to 5, **characterized by** at least one electrodialysis unit (7) which enables the salt solution generated after the carbonate solution and the acidic solution sent to the mixture tank (6) are processed to separate again into acid and base.
